# EUROPÄISCHE PATENTSCHRIFT

(11) **EP 2 022 332 B1**
(45) Veröffentlichungstag und Bekanntmachung des Hinweises auf die Patenterteilung: **04.01.2012**
(21) Anmeldenummer: 08009091.3
(22) Anmeldetag: 16.05.2008
(51) Int. Cl.: A01N 59/00, A01N 37/02, A01N 31/02, A01P 1/00

(54) **Wässeriges Desinfektionsmittel zur Herabsetzung der Keimzahl in Luft**
Aqueous disinfectant for reducing the number of bacteria in air
Produit de désinfection aqueux destiné à réduire le nombre de germes dans l'air

(30) Priorität: 02.08.2007 EP 07015174
(43) Veröffentlichungstag der Anmeldung: 11.02.2009
(73) Patentinhaber: WESSO AG, 91217 Hersbruck (DE)
(72) Erfinder: Kimmel, Stefan, 90409 Nürnberg (DE)
(74) Vertreter: Walcher, Armin

(56) Entgegenhaltungen:
- EP-A- 0 252 278
- EP-A- 1 374 679
- WO-A-03/045144
- WO-A-2004/035718
- GB-A- 2 319 179
- US-A1- 2003 035 754
- DATABASE WPI Week 199946 Thomson Scientific, London, GB; AN 1999-541010 XP002487487 & BE 1 011 452 A6 (VAN OS J) 7. September 1999 (1999-09-07) -& BE 1 011 452 A 7. September 1999 (1999-09-07)

## Beschreibung

Die Erfindung betrifft die Verwendung eines wässerigen Desinfektionsmittels zur Luftdesinfektion und/oder Luftkeimreduzierung.

Die Luftkeimreduzierung und Luftdesinfektion mit Desinfektionsmitteln in Form von Aerosolen spielt in verschiedenen Bereichen der gewerblichen Produktion eine Rolle, wie bei der Lebensmittelverarbeitung, in der pharmazeutischen und/oder der Kosmetikindustrie. Darüber hinaus werden auch im Pflanzenschutz, beispielsweise in Gewächshäusern, Desinfektionsmittel eingesetzt. Die Luftkeimreduzierung und Luftdesinfektion mit Wirkstoff-Aerosolen erfolgt ferner zu medizinischen Zwecken oder im Rahmen einer Sanierung von Gebäuden, vor allem im Hinblick auf den Befall mit Schimmel.

Die DE 202006016535 U1 beschreibt eine hoch konzentrierte Wasserstoffperoxidlösung von mindestens 50 % Wasserstoffperoxid zur Desinfektion von Klimaanlagen in Form von Aerosolen. Eine ausreichende Wirkung wird jedoch nur durch die hohe Konzentration und Dosierung des Peroxids erzielt. Aufgrund der oxidierenden Eigenschaften des Aerosols kann dieses jedoch nur in geschlossenen Systemen verwendet werden oder es müssen umfangreiche Schutzmaßnahmen für exponierte Personen ergriffen werden. Dies ist generell bei Desinfektionsmitteln erforderlich, wenn die vernebelten Lösungen einen pH-Wert im stark sauren Bereich aufweisen, oxidierend und/oder korrosiv, z.B. gegenüber dem Geräte-Material und/oder produzierten Produkten, wirken.

Um diese unerwünschten Effekte zu verringern, werden Kombinationen aus Peroxiden mit anderen antimikrobiellen Substanzen eingesetzt, die beispielsweise durch Reduktion der Oberflächenspannung von Flüssigkeiten synergistisch den antimikrobiellen Effekt der Peroxide unterstützen.

In der DE 102004022392 A1 ist eine Lösung aus Percarbonsäuren und nichtionischen Tensiden beschrieben, die für die Luftdesinfektion vernebelt werden. Tenside können jedoch unerwünsche Rückstände auf Lebensmitteln hinterlassen.

Propylenglykol wird z. B. als Mittel zum Erhalten der Feuchtigkeit in Tabak und zum Schutz gegen Schimmelbefall eingesetzt. Ähnlich wie bei der Anwendung von Ethanol zu Desinfektionszwecken sind hier sehr hohe Konzentrationen des Lösungsmittels gebräuchlich. Konzentrationen in einer Größenordnung von fünf Prozent und weniger werden in antimikrobiellen Kombinationspräparaten nicht genutzt.

Im Stand der Technik kommen Aerosole aus wässerigen-alkoholischen Lösungen mit Peroxiden und schwachen Säuren zur Anwendung, um der Entwicklung von unerwünschten Mikroorganismen vorzubeugen bzw. diese zu inaktivieren. Aufgrund der hohen Peroxidkonzentration von über 10 Gew.-% (US 6,106,854), bezogen auf das Gesamtgewicht des Desinfektionsmittels, sind derartige Aerosole nicht zur dauerhaften Anwendung zur Desinfektion von Luft in Räumen geeignet, in denen Personen arbeiten oder in welchen sich empfindliche Produkte befinden.

Die WO 2004/035718 A2 betrifft ein Konzentrat eines Reinigungsmittels zum Auflösen von Biofouling. Die WO 03/045144 A1 betrifft ein Mittel zur Herabsetzung der Keimzahl und Stabilisierung von Wasser und wässrigen Lösungen. Die US 2003/0035754 A1 betrifft eine Vorrichtung zur Dekontamination.

Es ist Aufgabe der vorliegenden Erfindung, ein Desinfektionsmittel zur Herabsetzung der Keimzahl in der Luft und/oder zur Desinfektion der Luft bereit zu stellen, das in Form eines Aerosols anwendbar ist, eine starke und langfristige Wirkung aufweist, nicht toxisch und/oder nicht korrosiv wirkt.

Die Aufgabe wird durch die Verwendung eines wässerigen Desinfektionsmittels gemäß Anspruch 1 gelöst, umfassend:
a) mindestens eine Peroxidverbindung,
b) mindestens ein organisches Lösungsmittel, ausgewählt aus einem aliphatischen Alkohol und/oder aliphatischen Ether, und
c) Essigsäure,
wobei die Peroxidverbindung in einer Konzentration von weniger als 10 Gew.-%, Tenside in einer Konzentration von weniger als 0,1 Gew.-% und Chelatisierungsmittel in einer Konzentration von weniger als 0,1 Gew.%, bezogen auf das Gesamtgewicht des wässerigen Desinfektionsmittels, enthalten sind.

Bei einer Ausführungsform besteht das erfindungsgemäß zu verwendende wässerige Desinfektionmittel aus
a) mindestens einer Peroxidverbindung,
b) mindestens einem organischen Lösungsmittel, ausgewählt aus einem aliphatischen Alkohol und/oder aliphatischen Ether, und
c) Essigsäure,
wobei die Peroxidverbindung in einer Konzentration von weniger als 10 Gew.-%, Tenside in einer Konzentration von weniger als 0,1 Gew.-% und Chelatisierungsmittel in einer Konzentration von weniger als 0,1 Gew.%, bezogen auf das Gesamtgewicht des wässerigen Desinfektionsmittels, enthalten sind.

Bei einer Ausführungsform des erfindungsgemäße zu verwendenden wässerigen Desinfektionsmittels umfasst dieses ferner eine schwache organische Säure, ausgewählt aus der Gruppe, bestehend aus, Brenztraubensäure, Milchsäure, Sorbinsäure, Salze davon, Derivate davon und Mischungen davon. Besonders bevorzugt sind, Brenztraubensäure und/oder Milchsäure. Insbesondere wird L-(+)-Milchsäure als schwache organische Säure eingesetzt. Essigsäure hat sich aufgrund ihrer guten Löslichkeit als besonders geeignet erwiesen. Vorzugsweise weisen die schwachen organischen Säuren 2 bis 6 Kohlenstoffatome auf. Vorzugsweise weist die schwache organische Säure einen pKs-Wert im Bereich von 2 bis 7, vorzugsweise von 2 bis 5,5, auf Vorzugsweise handelt es sich um eine gesältigte Säure.

Bei einer bevorzugten Ausführungsform des erfindungsgemäß zu verwendenden wässerigen Desinfektionsmittels umfasst dieses weniger als 1 Gew.-%, vorzugsweise weniger als 0,1 Gew.-%, weiter bevorzugt keine starke Säure, bezogen auf das Gesamtgewicht des wässerigen Desinfektionsmittels. Unter starken Säuren sind vorzugsweise Säuren mit einem pKs-Wert kleiner 1,9 zu verstehen. Starke Säuren sind beispielsweise Schwefelsäure und/oder Salzsäure.

Vorzugsweise enthält das erfindungsgemäß zu verwendende wässerige Desinfektionsmittel weniger als 1 Gew.-%, vorzugsweise weniger als 0,01 Gew.-%, Phosphorsäure, phosphorige Säure, Phosphonsäure, Phosphinsäure, Peroxophosphorsäure, Hypodiphosphonsäure, Diphosphonsäure, Hypodiphosphonsäure, Diphosphorsäure, Peroxodiphosphorsäure, Derivate davon, Salze und/oder Mischungen davon, bezogen auf das Gesamtgewicht des wässerigen Desinfektionsmittels. Am meisten bevorzugt enthält das erfindungsgemäß zu verwendende wässerige Desinfektionsmittel weniger als 1 Gew.-%, vorzugsweise weniger als 0,01 Gew.-%, anorganische Säure, bezogen auf das Gesamtgewicht des wässerigen Desinfektionsmittels.

Das erfindungsgemäß zu verwendende wässerige Desinfektionsmittel umfasst weniger als 0,1 Gew.-%, weiter bevorzugt keine, Tenside, bezogen auf das Gesamtgewicht des wässerigen Desinfektionsmittels.

Unter Tensiden sind vorzugsweise amphiphile organische Verbindungen mit grenzflächenaktiven Reaktionen zu verstehen, die vorzugsweise in Reinigungsmitteln, Entfettern, Waschmitteln, Spülmitteln und/oder Shampoos als Detergentien verwendet werden. Bei den Tensiden kann es sich um anionische, amphotere, nicht-ionische, kationische Tenside und/oder Mischungen davon handeln. Die Tenside besitzen vorzugsweise amphiphile Eigenschaften. Beispielsweise weisen die Tenside längerkettige Alkylgruppen als unpolaren Rest auf. Es kann sich auch um Polyalkylenglykole handeln.

Bei einer Ausführungsform des erfindungsgemäß zu verwendenden wässerigen Desinfektionsmittels umfasst dieses weniger als 1 Gew.-%, vorzugsweise weniger als 0,1 Gew.-%, weiter bevorzugt keine, Stoffe, ausgewählt aus der Gruppe, bestehend aus Benzalkoniumchlorid, Didecyldimethylammoniumchlorid, Mecetroniumetilsulfat, Octenidin, Polyhexamethylenbiguanid, Chlorhexidingluconat, Chlorhexidinacetat, Cetrimid, Cetylpyridiniumchlorid, Hexetidin, Alkylthiuroniumverbindungen, Benzylalkohol, Phenoxyethanol, Phenoxypropanol, Ethylhexylglycerin, Undecylsäure, 2-Biphenol, Triclosan, p-Chlor-m-Xylenol, Thymol, Harnstoff, Benzoesäure, Ozon, Derivate davon und Mischungen davon, bezogen auf das Gesamtgewicht des wässerigen Desinfektionsmittels.

Das erfindungsgemäß zu verwendende wässerige Desinfektionsmittel umfasst weniger als 0,1 Gew.-%, weiter bevorzugt keine, Chelatisierungsmittel, bezogen auf das Gesamtgewicht des wässerigen Desinfektionsmittels.

Bei den Chelatisierungsmitteln, vorzugsweise mit ein- bis zu mehrzähnigen Liganden, handelt es sich beispielsweise um Zitronensäure, Glycin, Salicylsäure, Asparaginsäure, Glutaminsäure, Malonsäure, Oxalsäure, Bernsteinsäure, Picolinsäure, Phthalsäure, Dipicolinsäure, Aminophosphat, EDTA oder Mischungen davon.

Bei einer Ausführungsform ist die Peroxidverbindung aus der Gruppe, bestehend aus Alkaliperoxid, Erdalkaliperoxid, Wasserstoffperoxid, Peroxysäuren, Perboraten, Perphosphaten, Percarbonaten, Persilikaten, Persulfaten, Derivaten und Mischungen davon, ausgewählt. Beispielsweise sind Kaliumperoxymonosulfat, Kaliumperoxydisulfat, Kaliumperoxoborat, Natriumperoxoborat, Carbamidperoxid oder Mischungen davon geeignet. Bei einer Ausführungsform wird Wasserstoffperoxid eingesetzt. Vorzugsweise ist das Wasserstoffperoxid nur zu einem geringen Grad stabilisiert. Vorzugsweise enthält das Wasserstoffperoxid weniger als 1 Gew.-% Phosphorsäure und/oder andere Stabilisatoren, bezogen auf das Gesamtgewicht des Wasserstoffperoxids bzw. der Wasserstoffperoxidlösung. Am meisten bevorzugt enthält das Wasserstoffperoxid oder die Wasserstoffperoxidlösung weniger als 0,01 Gew.-% und/oder andere Stabilisatoren, bezogen auf das Gesamtgewicht des Wasserstoffperoxids oder der Wasserstoffperoxidlösung.

Die Peroxidverbindung und die schwache organische Säure können miteinander zu Peroxidverbindungen der schwachen organischen Säure (Peroxysäuren) in dem wässerigen Desinfektionsmittel reagieren. Alternativ können auch direkt Peroxidverbindungen der schwachen organischen Säure in dem erfindungsgemäßen wässerigen Desinfektionsmittel eingesetzt werden. Insbesondere kann das erfindungsgemäße wässerige Desinfektionsmittel Peroxyessigsäure, Peroxybrenztraubensäure, Peroxymilchsäure, Peroxysorbinsäure enthalten. Vorzugsweise weisen die schwachen organischen Säuren 2 bis 6 Kohlenstoffatome auf.

Die Konzentration der schwachen organischen Peroxysäuren kann von 0,000001 bis 0,1 Gew.-%, vorzugsweise von 0,005 bis 0,03 Gew.-%, bezogen auf das Gesamtgewicht des wässerigen Desinfektionsmittels, betragen.

Bei einer Ausführungsform umfasst das wässerige Desinfektionsmittel ein organisches Lösungsmittel ausgewählt aus der Gruppe, bestehend aus Glycerin, Ethylenglycol, Propylenglykol, Diethylenglycol, Monomethyletherdipropylenglycol, Methanol, Ethanol, 1-Propanol, Isopropanol, Glycolether und Mischungen davon. Als Propylenglycol ist 1,2-Propylenglycol und/oder 1,3-Propylenglycol geeignet.

Als besonders geeignete organische Lösungsmittel haben sich aliphatische, lineare oder verzweigte Alkohole, vorzugsweise mit 1 bis 4 Kohlenstoffatomen, weiter bevorzugt mit 2 oder 3 Kohlenstoffatomen, wie insbesondere Ethanol, 1-Propanol und/oder Isopropanol, erwiesen.

Als Ether oder Glycolether sind beispielsweise Diethylether, 2-Methoxyethanol, 2-Ethoxyethanol, 2-Propoxyethanol, 2-Isopropoxyethanol, 2-Butoxyethanol, 2-(2-Ethoxyethoxy)ethanol, 2-(2-Butoxyethoxy)ethanol, Dimethoxyethan, Diethoxyethan, Dibutoxyethan oder Mischungen davon geeignet.

Vorzugsweise liegt der pH-Wert des erfindungsgemäß zu verwendenden wässerigen Desinfektionsmittels in einem Bereich von 5,5 und 6,8. Der pH-Wert kann auch durch einen Puffer stabilisiert sein, z. B. durch Kombination von schwachen organischen Säuren mit ihren Salzen.

Bei einer Ausführungsform des erfindungsgemäß zu verwendenden wässerigen Desinfektionsmittels umfasst dieses die Peroxidverbindung in einem molaren Überschuß, bezogen auf die Menge der schwachen organischen Säure. Der molare Überschuß liegt dabei vorzugsweise in einem Bereich von 10:1 bis 1000:1, weiter bevorzugt von 50:1 bis 500:1, bezogen auf das Verhältnis von Peroxidverbindung zu schwacher organischer Säure.

Bei einer Ausführungsform des erfindungsgemäß zu verwendenden wässerigen Desinfektionsmittels enthält dieses die Peroxidverbindung in einer Konzentration von 0,001 bis 10 Gew.-%, vorzugsweise von 0,5 bis 5 Gew.-%, weiter bevorzugt von 1 bis 3 Gew.-%, bezogen auf das Gesamtgewicht des wässerigen Desinfektionsmittels.

Bei einer Ausführungsform des erfindungsgemäß zu verwendenden wässerigen Desinfektionsmittels enthält dieses das organische Lösungsmittel in einer Konzentration von 0,01 bis 10 Gew.-%, vorzugsweise von 0,1 Gew.-% bis 5 Gew.-%, weiter bevorzugt von 0,1 bis 2 Gew.-%, bezogen auf das Gesamtgewicht des wässerigen Desinfektionsmittels.

Bei einer Ausführungsform des erfindungsgemäß zu verwendenden wässerigen Desinfektionsmittels enthält dieses die schwache organische Säure in einer Konzentration von 0,00001 bis 5 Gew.%, vorzugsweise von 0,001 bis 1 Gew.-%, weiter bevorzugt von 0,01 bis 0,1 Gew.-%, bezogen auf das Gesamtgewicht des wässerigen Desinfektionsmittels.

Das erfindungsgemäß zu verwendende wässerige Desinfektionsmittel weist überraschenderweise bei niedriger Toxizität eine ausreichend gute Wirksamkeit gegen Bakterien, Schimmelpilzsporen und/oder Hefen auf. Aufgrund der geringen Toxizität kann das erfindungsgemäß zu verwendende wässerige Desinfektionsmittel auch bei der Verarbeitung von Lebensmitteln eingesetzt werden. Ferner ist es auch zur Desinfektion bei der Herstellung von Arzneimitteln, Kosmetika und/oder im medizinischen Bereich, insbesondere in Krankenhäusern, geeignet. Die Desinfektion kann vorzugsweise sogar in Gegenwart von Personen durchgeführt werden.

Die spezielle Kombination aus wenigstens einer Peroxidverbindung, wenigstens einem organischem Lösungsmittel und wenigstens Essigsäure stellt ein wässeriges Desinfektionsmittel bereit, das hervorragend zur Luftdesinfektion und/oder Luftkeimreduzierung geeignet ist. Ohne an eine Theorie gebunden zu sein, wird davon ausgegangen, dass die mikrobizide Wirkung von Peroxiden vor allem auf der Oxidation der Zellwand und -membran beruht, die durch die Zugabe von aliphatischen Ethern und/oder Alkoholen sowie einer schwachen organischen Säure synergistisch verstärkt wird. Es wird vermutet, dass die aliphatischen Ether und/oder Alkohole eine strukturelle Auflockerung und Disintegration der Lipidmembranen, Sporenkapsel und Zellwand bewirken, und die schwache organische Säure die Peroxidverbindung stabilisiert. Dies bewirkt vermutlich eine verlängerte Aktivität des wässerigen Desinfektionsmittels nach dem Ausbringen als Aerosol. Somit können in einem erfindungsgemäßen antimikrobiellen Aerosol, das die vollständige Wirkung über Stunden bis zu mehreren Wochen entfaltet, diese Stoffe in überraschend niedrigen Konzentrationen eine ausreichende Desinfektionswirkung gewährleisten. Insbesondere die speziellen in dieser Anmeldung genannten Kombinationen aus einer Peroxidverbindung, einem speziellen Ether und/oder Alkohol und einer schwachen organischen Säure weisen eine hervorragende Langzeitstabilisierung und Langzeitwirkung auf.

Aus bislang nicht verstandenen Gründen sind folgende erfindungsgemäß zu verwendende wässerige Desinfektionsmittel besonders wirksam, welche folgende Stoffe umfassen:
- Wasserstoffperoxid, Essigsäure und Ethanol oder
- Wasserstoffperoxid, Essigsäure und Propylenglycol.

Das erfindungsgemäß zu verwendende wässerige Desinfektionsmittel wird zur Luftdesinfektion und/oder Luftkeimreduzierung eingesetzt. Bei den Mikroorganismen kann es sich beispielsweise um Bakterien, Archaea, Mikroalgen, Viren, Protozoen, Hefen, Chlamydien, und/oder Pilze handeln. Dies umfasst vorzugsweise die jeweiligen Sporenformen.

Die Bakterien können gram-positiv und/oder gram-negativ sein. Das erfindungsgemäß zu verwendende Desinfektionsmittel ist, insbesondere als Aerosol, wirksam gegen Problemkeime von medizinischer Bedeutung. Insbesondere wirkt das erfindungsgemäße Desinfektionsmittel, vorzugsweise als Aerosol, gegen Bakterien wie Staphylococcus aureus, insbesondere Methicillin-resistente Formen (MRSA), Streptococcus pneumoniae, Haemophilus influenzae, Mycoplasma pneumoniae, Legionella pneumophila, Pseudomonas aeruginosa, Klebsiella pneumoniae, Proteus mirabilis, Mycobacterium tuberculosis und/oder chlamydia pneumoniae.

Vorzugsweise wirkt das erfindungsgemäß zu verwendende Desinfektionsmittel, insbesondere als Aerosol, gegen Hefen wie candida albicans.

Vorzugsweise wirkt das erfindungsgemäß zu verwendende Desinfektionsmittel, insbesondere als Aerosol, auch gegen Viren, wie Influenza A und/oder B, Parainfluenzavirus, Adenoviren, Respiratory Syncytial Virus, Adenoviren, Vesiculäres Stomatitis Virus, SARS-Coronavirus und/oder Lassa-Virus.

Zu dem Spektrum gegen das erfindungsgemäß zu verwendende Desinfektionsmittel empfindlicher Keime gehören vorzugsweise auch typische Erreger von Lebensmittelinfektionen und -intoxikationen, wie beispielsweise Campylobacter jejuni, Clostridium perfringens, Escherichia coli 0157:H7, Listeria monocytogenes, Salmonella species, Toxoplasma gondii, Clostridium botulinum, Staphylococcus species, Bacillus cereus und/oder Schimmelpilze, wie Aspergillus flavus, Aspergillus niger und/oder Penicillium species.

Unter Luftdesinfektion ist vorzugsweise eine Reduktion der Mikroorganismen um mindestens den Faktor 10⁴ bis 10⁵ zu verstehen. Unter Luftkeimreduzierung ist vorzugsweise eine Reduktion der Mikroorganismen in einem Bereich des Faktors **10^{1/2}** bis 10³ zu verstehen, besonders bevorzugt von 10^{1/2} bis 10².

Das wässerige Desinfektionsmittel kann beispielsweise zur Luftdesinfektion und/oder Luftkeimreduzierung bei der Produktion von Lebensmitteln, bei der Verpackung von Lebensmitteln, bei der Lebensmittellagerung, in Kühl- und Reiferäumen, beim Lebensmittelverkauf, bei der Herstellung und/oder Verpackung von Arzneimitteln, bei biotechnologischen Verfahren, in privaten Haushalten, in Sporteinrichtungen, in Schwimmbädern, in medizinischen Bereichen und/oder in Lüftungs- und Klimaanlagen eingesetzt werden.

Mit dem erfindungsgemäß zu verwendenden wässerigen Desinfektionsmittel können Anlagen zur industriellen Produktion, Gebäude und Räume zur industriellen Produktion, einschließlich der Lebensmittelherstellung und/oder -verarbeitung desinfiziert oder die Keimzahl reduziert werden. Ferner kann mit dem erfindungsgemäß zu verwendenden wässerigen Desinfektionsmittel eine Packstoff-Vorentkeimung und/oder Sanierung von Klima- und Lüftungsanlagen durchgeführt werden.

Die Aufgabe wird ferner durch die Verwendung des wässrigen Desinfektionsmittels in einem Verfahren zur Luftdesinfektion und/oder Reduzierung der Keimzahl in der Luft gelöst, wobei das erfindungsgemäß zu verwendende wässerige Desinfektionsmittel in Form eines Aerosols in die Luft ausgebracht wird. Das Aerosol kann durch Sprühen, Verdüsen, Verdampfen und/oder Kaltvernebelung hergestellt werden. Vorzugsweise wird das Aerosol durch Ultraschallkaltvernebelung hergestellt. Beispielsweise kann das Aerosol durch einen hinsichtlich Volumen und Zeit elektronisch geregelten Ultraschall-Kaltvernebler hergestellt bzw. ausgebracht werden.

Bei einer Ausführungsform der erfindungsgemäßen Verwendung wird das wässerige Desinfektionsmittel in die Luft in einer Konzentration von 0,01 bis 50 ml wässeriges Desinfektionsmittel pro m³ Luft pro h, vorzugsweise 0,02 bis 10 ml wässeriges Desinfektionsmittel pro m³ Luft pro h, weiter bevorzugt 0,04 bis 1 ml wässeriges Desinfektionsmittel pro m³ Luft pro h, in Form eines Aerosols eingebracht. Vorzugsweise weisen die Flüssigkeitströpfchen des Aerosols eine mittlere Tropfengröße in einem Bereich von 20 nm bis 50 µm, vorzugsweise in einem Bereich von 25 nm bis 5 µm, auf.

Bei einer Ausführungsform der erfindungsgemäßen Verwendung liegt die Konzentration der Peroxide im Aerosol im Bereich zwischen 0,00005 und 1,5 g pro m³ Raumvolumen pro Stunde, die Konzentration des organischen Lösungsmittels zwischen 0,0000015 und 2,5 g pro m³ Raumvolumen pro Stunde und/oder die Konzentration der schwachen organischen Säure zwischen 0,000000001 und 0,15 g pro m³ Raumvolumen pro Stunde. Vorzugsweise liegt die Konzentration der Peroxide im Aerosol im Bereich zwischen 0,0001 und 0,3 g pro m³ Raumvolumen pro Stunde, die Konzentration der Lösungsmittel zwischen 0,000003 und 0,5 g pro m³ Raumvolumen pro Stunde und/oder die Konzentration der Säure zwischen 0,000000002 und 0,03 g pro m³ Raumvolumen pro Stunde.

Bei der erfindungsgemäßen Verwendung wird das Aerosol kontinuierlich oder in Intervallen in die zu desinfizierende Luft ausgebracht. Dabei beträgt die Behandlungsdauer der Intervalle bzw. der kontinuierlichen Behandlung von 2 Minuten bis 7 Tagen, vorzugsweise 1 h bis 1 Tag. Die Gesamtdauer der Behandlung kann von 2 Wochen bis zu 5 Jahren dauern. Die Behandlung kann in der gesamten Raumluft oder in Raumluft-Kompartimenten, die teilweise oder vollständig von der Umgebung abgegrenzt sind, erfolgen.

Die nachfolgenden Figuren und Beispiele sollen die vorliegende Erfindung erläutern, aber in keiner Weise beschränken.

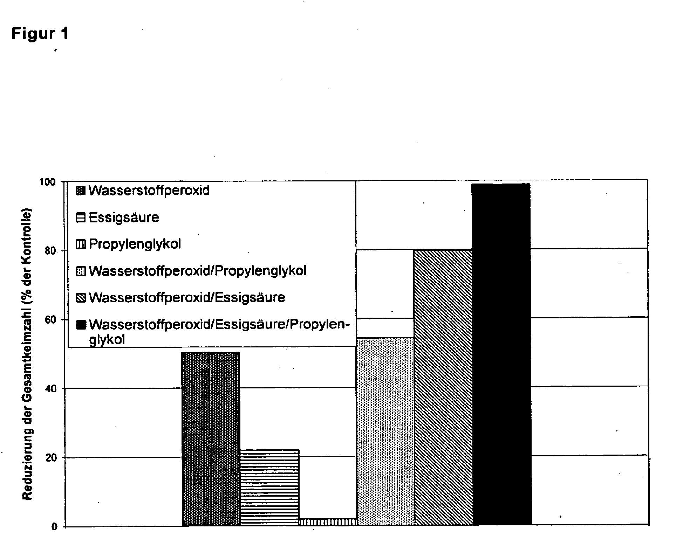

Figur 1 (nicht unter den Umfang der Erfindung fallend) zeigt ein Balkendiagramm mit der prozentualen Reduktion der Gesamtkeimzahl der Bakterien in Flusswasser, bezogen auf die Gesamtkeimzahl der Bakterien einer nur mit Leitungswasser behandelten Flusswasserprobe. Als Desinfektionsmittel wurden unterschiedliche Kombinationen aus H₂O₂, Essigsäure und Propylenglycol eingesetzt.

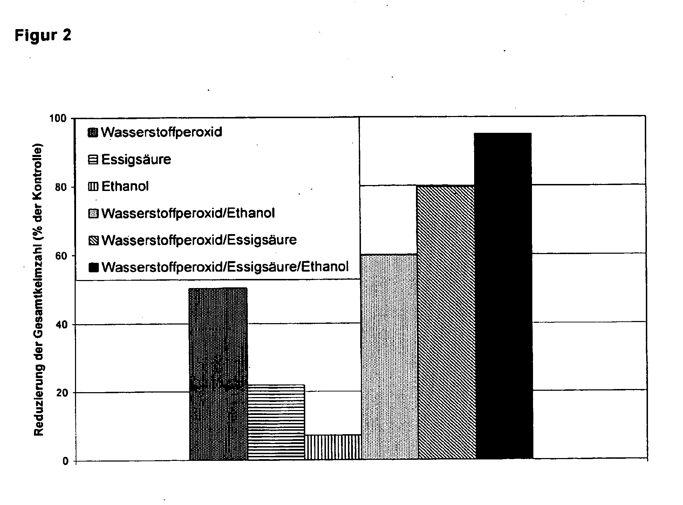

Figur 2 (nicht unter den Umfang der Erfindung fallend) zeigt ein Balkendiagramm mit der prozentualen Reduktion der Gesamtkeimzahl der Bakterien in Flusswasser, bezogen auf die Gesamtkeimzahl der Bakterien einer nur mit Leitungswasser behandelten Flusswasserprobe. Als wässeriges Desinfektionsmittel wurden unterschiedliche Kombinationen aus H₂O₂, Essigsäure und Ethanol eingesetzt.

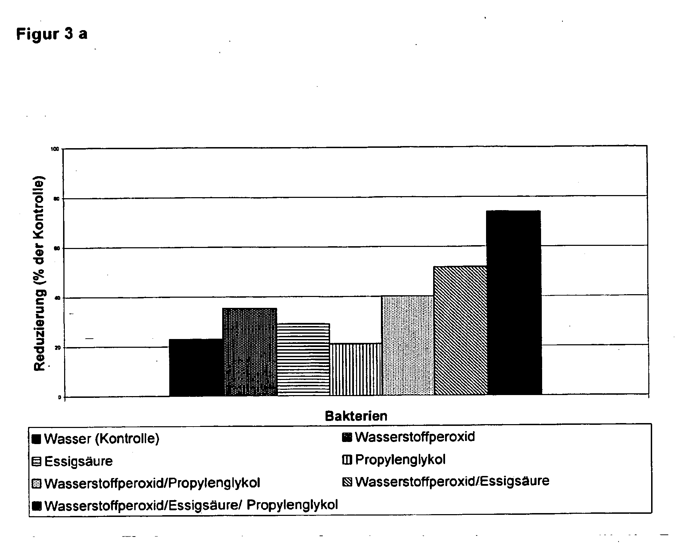

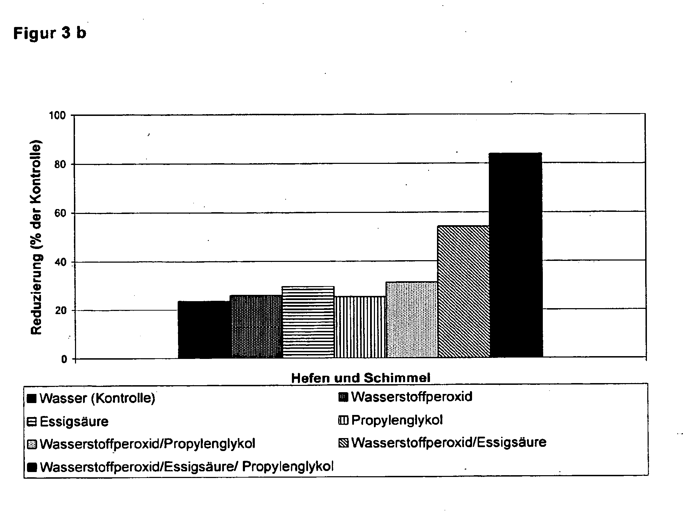

Figur 3 zeigt ein Balkendiagramm mit der prozentualen Reduktion der Gesamtkeimzahl der Bakterien (Figur 3a) bzw. der prozentualen Reduktion von Schimmelpilzsporen und Hefen (Figur 3b) in der Luft eines Raumes, der 24 h mit einem Aerosol aus wässerigem Desinfektionsmittel behandelt wurde, bezogen auf die Menge an Bakterien bzw. Schimmelpilzsporen und Hefen in der unbehandelten Raumluft. Als wässeriges Desinfektionsmittel wurden unterschiedliche Kombinationen aus H₂O₂, Essigsäure und Propylenglycol eingesetzt.

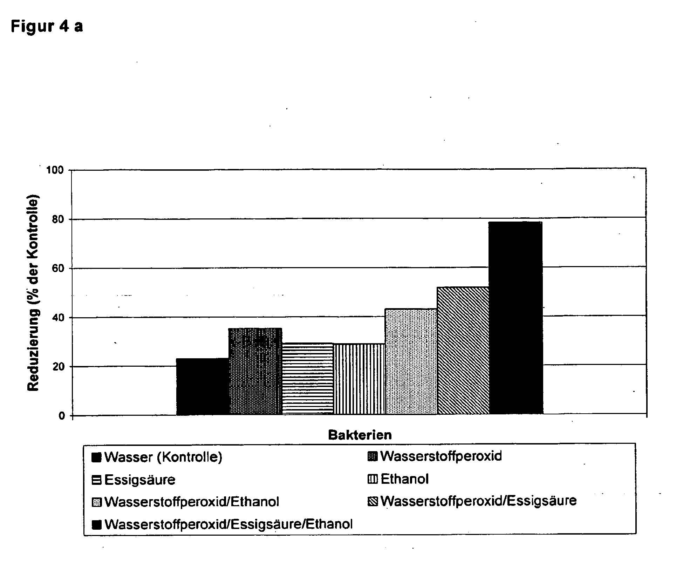

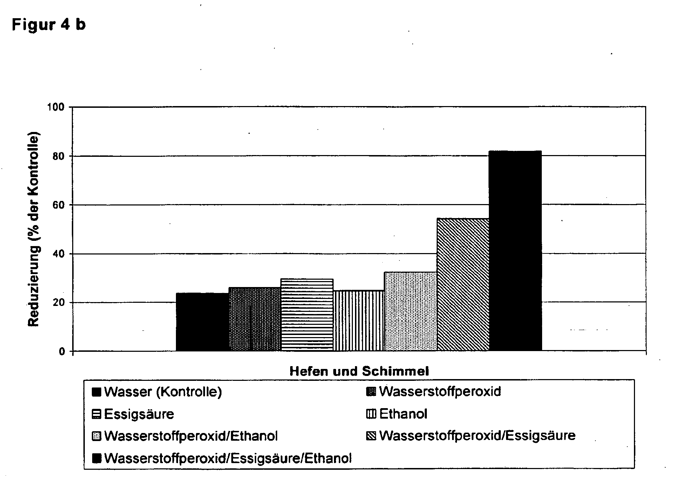

Figur 4 zeigt ein Balkendiagramm mit der prozentualen Reduktion der Gesamtkeimzahl der Bakterien (Figur 4a) bzw. der prozentualen Reduktion von Schimmelpilzsporen und Hefen (Figur 4b) in der Luft eines Raumes, der 24 h mit einem Aerosol aus wässerigem Desinfektionsmittel behandelt wurde, bezogen auf die Menge an Bakterien bzw. Schimmelpilzsporen und Hefen in der unbehandelten Raumluft. Als wässeriges Desinfektionsmittel wurden unterschiedliche Kombinationen aus H₂O₂, Essigsäure und Ethanol eingesetzt.

### Beispiele

### Beispiel 1

Das wässerige Desinfektionsmittel wurde mit einer Konzentration
1,5 Gew.- % Wasserstoffperoxid,
0,1 Gew.-% 1,2-Propylenglykol,
0,1 Gew.-% Essigsäure,
0,025 Gew.- % Peroxyessigsäure,
bezogen auf das Gesamtgewicht des wässerigen Desinfektionsmittels, bereitgestellt.

### Beispiel 2

Eine weitere bevorzugte Ausführungsform des erfindungsgemäß zu verwendenden wässerigen Desinfektionsmittels zur Luftkeimreduzierung und Luftdesinfektion, mit einem gegen grampositive und gramnegative Bakterien und Schimmelpilzsporen gerichteten Wirkspektrum, enthielt die Komponenten:
1,5 Gew.-% Wasserstoffperoxid,
0,1 Gew.-% Propylenglykol,
0,025 bis 0,1 Gew.-% Essigsäure,
0,001 bis 0,025 Gew.-% Peressigsäure,
bezogen auf das Gesamtgewicht des wässerigen Desinfektionsmittels.

### Beispiel 3

Eine bevorzugte Ausführungsform des erfindungsgemäß zu verwendenden wässerigen Desinfektionsmittels zur Raumdesinfektion, mit Wirksamkeit insbesondere gegen Schimmelpilzsporen, enthielt die Komponenten:
1,5 Gew.-% Wasserstoffperoxid
0,1 Gew.-% Propylenglykol
0,1 bis 0,2 Gew.-% Essigsäure
0,025 bis 0,05 Gew.-% Peressigsäure,
bezogen auf das Gesamtgewicht des wässerigen Desinfektionsmittels.

### Beispiel 4 (Vergleichsbeispiel; nicht unter den Umfang der Erfindung fallend)

Bei Raumtemperatur wurde zu Flusswasser (Verdünnung 1:5 bis 1:10, Gesamtkeimzahl 10³ bis 10⁴/ml nach der Verdünnung) 0,002 Gew.-% Wasserstoffperoxid, 0,1 Gew.-% Essigsäure, 0,15 Gew.-% Propylenglykol oder 0,15 Gew.-% Ethanol, bezogen auf das Gesamtgewicht des Flusswassers, jeweils allein oder in unterschiedlichen Kombinationen zugegeben. Nach 24 Stunden Einwirkzeit bei Raumtemperatur wurde 1 ml Flusswasser auf Compact Dry TC Kulturplatten der Firma HyServe, Uffing b. München, aufgebracht. Die Kulturplatten wurden 48 Stunden bei 35 °C inkubiert. Die Ergebnisse aus jeweils 3 Versuchen wurden gemittelt. Die prozentuale Reduzierung der Gesamtkeimzahl der Bakterien im behandelten Flusswasser wurde gegenüber einer mit dem gleichen Volumen Leitungswasser behandelten Probe bestimmt.

Figuren 1 und 2 zeigen die prozentuale Reduzierung der Keimzahlen gegenüber der nur mit Leitungswasser behandelten Flusswasserprobe. Die nur mit Ethanol oder Propylenglykol oder Essigsäure behandelten Proben zeigen nur eine geringe Reduzierung der Gesamtkeimzahl der Bakterien. Eine verbesserte Wirksamkeit wurde in Kombination mit Wasserstoffperoxid erreicht. Überraschenderweise wurde bei der Behandlung mit einer Dreier-Kombination aus H₂O₂, Essigsäure und Ethanol bzw. Propylenglykol eine Reduktion der Bakterien von über 90 % erreicht.

### Beispiel 5

In einem Testraum mit einer Grundfläche von 12 Quadratmetern bei 2,5 Metern Raumhöhe (Raumvolumen 30 Kubikmeter) wurde als Aerosol ein wässeriges Desinfektionsmittel mit einem Ultraschall-Kaltvernebler der Firma BOGA mit einer elektronisch geregelten Dosierung von 10 ml/Stunde eingebracht. Bezogen auf das Raumvolumen betrug die Dosierung der eingesetzten Lösung somit 0,33 ml pro m³ Raumvolumen pro Stunde. Die mittlere Tropfengröße des Aerosols lag im Bereich zwischen einem und 8 µm.

Die Ausgangswerte bei der Gesamtkeimzahl (vorwiegend Bakterien, darunter Bacillus Species, Staphylokokkus epidermidis, Mikrococcus Species) und bei der Zahl der Schimmelpilzsporen und Hefen (darunter Aspergillus Species) lagen jeweils im Bereich zwischen 200 und 1000 Kolonie bildende Einheiten/Kubikmeter Raumvolumen.

Das wässerige Desinfektionsmittel umfasste eine wässerige Lösung mit 1,5 Gew.-% Wasserstoffperoxid, 0,1 Gew.-% Essigsäure, 0,2 Gew.-% Propylenglykol bzw. 0,5 Gew.-% Ethanol, bezogen auf das Gesamtgewicht des wässerigen Desinfektionsmittels. Ca. 36 Stunden nach Herstellen der Lösung mit 1,5 % Wasserstoffperoxid, 0,1 % Essigsäure, 0,2 % Propylenglykol bzw. 0,5 Gew.-% Ethanol wurde mit semi-quantitativen Teststreifen eine Konzentration von 0,25 Gew.-% Peressigsäure, bezogen auf das Gesamtgewicht des wässerigen Desinfektionsmittels, in diesem wässerigen Desinfektionsmittel gemessen.

Die Gesamtkeimzahl (überwiegend Bakterien) als auch die Zahl von Hefen und Schimmelpilzsporen wurde vor und 24 Stunden nach dem dauerhaften Ausbringen von Wasser oder wässerigem Desinfektionsmittel in der Luft bestimmt. Bestimmt wurden jeweils die Mittelwerte aus drei verschiedenen Versuchen mit Doppelbestimmungen jedes einzelnen Versuches. Dabei wurde ein Probenvolumen von 100 I Raumluft mit dem Luftkeimsammler RCS Plus der Firma Biotest HYCON über die Luftkeimindikatoren TC und SDX geführt.

Figur 3 und 4 zeigen die prozentuale Reduzierung der Keimzahlen gegenüber der unbehandelten Luft. Die nur mit Wasserstoffperoxid, Essigsäure, Ethanol bzw. Propylenglykol behandelten Proben zeigten nur eine geringe Reduzierung der Gesamtkeimzahl der Bakterien bzw. der Schimmelpilze und Hefen. Eine verbesserte Wirksamkeit wurde bei Zweier-Kombinationen mit Wasserstoffperoxid erreicht. Überraschenderweise wurde bei der Behandlung mit einer Dreier-Kombination aus H₂O₂, Essigsäure und Ethanol bzw. Propylenglykol eine Reduktion der Bakterien, Schimmelpilze und Hefen von über 80 % bereits nach 24 Stunden erreicht. Dieser Versuch zeigt, dass überraschenderweise das erfindungsgemäße wässerige Desinfektionsmittel auch zur Luftdesinfektion geeignet ist.

## Patentansprüche

1. Verwendung eines wässerigen Desinfektionsmittels zur Luftdesinfektion und/oder Luftkeimreduzierung, umfassend:
a) mindestens eine Peroxidverbindung,
b) mindestens ein organisches Lösungsmittel, ausgewählt aus einem aliphatischen Alkohol und/oder aliphatischen Ether, und
c) Essigsäure,
wobei die Peroxidverbindung in einer Konzentration von weniger als 10 Gew.-%, Tenside in einer Konzentration von weniger als 0,1 Gew.-% und Chelatisierungsmittel in einer Konzentration von weniger als 0,1 Gew.-%, bezogen auf das Gesamtgewicht des wässerigen Desinfektionsmittels, in dem wässerigen Desinfektionsmittel enthalten sind.

2. Verwendung eines wässerigen Desinfektionsmittels nach Anspruch 1, ferner umfassend eine schwache organische Säure, ausgewählt aus der Gruppe, bestehend aus Brenztraubensäure, Milchsäure, Sorbinsäure, Salze davon, Derivate davon und Mischungen davon.

3. Verwendung eines wässerigen Desinfektionsmittels nach Anspruch 1 oder 2, wobei die Peroxidverbindung aus der Gruppe, bestehend aus Alkaliperoxid, Erdalkaliperoxid, Wasserstoffperoxid, Peroxysäuren, Perboraten, Perphosphaten, Percarbonaten, Persilikaten, Persulfaten, Derivaten und Mischungen davon, ausgewählt ist.

4. Verwendung eines wässerigen Desinfektionsmittels nach einem der vorhergehenden Ansprüche, wobei das organische Lösungsmittel aus der Gruppe, bestehend aus Glycerin, Ethylenglycol, Propylenglykol, Diethylenglycol, Monomethyletherdipropylenglycol, Methanol, Ethanol, 1-Propanol, Isopropanol, Glycolether und Mischungen davon, ausgewählt ist.

5. Verwendung eines wässerigen Desinfektionsmittels nach einem der vorhergehenden Ansprüche, wobei die Peroxidverbindung in einer Konzentration von 0,001 bis 10 Gew.-%, bezogen auf das Gesamtgewicht des wässerigen Desinfektionsmittels, in dem wässerigen Desinfektionsmittel enthalten ist.

6. Verwendung eines wässerigen Desinfektionsmittels nach einem der vorhergehenden Ansprüche, wobei das organische Lösungsmittel in einer Konzentration von 0,01 bis 10 Gew.-%, bezogen auf das Gesamtgewicht des wässerigen Desinfektionsmittels, in dem wässerigen Desinfektionsmittel enthalten ist.

7. Verwendung eines wässerigen Desinfektionsmittels nach einem der vorhergehenden Ansprüche, wobei die schwache organische Säure in einer Konzentration von 0,00001 bis 5 Gew.-%, bezogen auf das Gesamtgewicht des wässerigen Desinfektionsmittels, in dem wässerigen Desinfektionsmittel enthalten ist.

8. Verwendung des wässerigen Desinfektionsmittels nach einem der vorhergehenden Ansprüche zur Luftdesinfektion und/oder Luftkeimreduzierung bei der Produktion von Lebensmitteln, bei der Verpackung von Lebensmitteln, bei der Lebensmittellagerung, in Kühl- und Reiferäumen, beim Lebensmittelverkauf, bei der Herstellung und/oder Verpackung von Arzneimitteln, bei biotechnologischen Verfahren, in privaten Haushalten, in Sporteinrichtungen, in Schwimmbädern, in medizinischen Bereichen und/oder in Lüftungs- und Klimaanlagen.

9. Verwendung des Desinfektionsmittels nach einem der vorhergehenden Ansprüche zur Desinfektion von Luft, wobei das wässerige Desinfektionsmittel nach einem der Ansprüche 1 bis 8 in die Luft in einer Konzentration von 0,01 bis 50 ml wässerigem Desinfektionsmittel pro m³ Luft pro h in Form eines Aerosols ausgebracht wird.

10. Verwendung nach Anspruch 9, wobei das Aerosol Flüssigkeitströpfchen mit einer mittleren Tropfengröße aus einem Bereich von 20 nm bis 50 µm aufweist.

11. Verwendung nach Anspruch 9 oder 10, wobei die Konzentration der Peroxide im Bereich zwischen 0,00005 und 1,5 g pro m³ Raumvolumen pro Stunde, die Konzentration des organischen Lösungsmittels zwischen 0,0000015 und 2,5 g pro m³ Raumvolumen pro Stunde und/oder die Konzentration der schwachen organischen Säure zwischen 0,000000001 und 0,15 g pro m³ Raumvolumen pro Stunde liegt.

## Claims

1. Use of an aqueous disinfectant for air disinfection and/or reduction of airborne germs, including:
a) at least one peroxide compound,
b) at least one organic solvent, selected from an aliphatic alcohol and/or aliphatic ether, and
c) acetic acid,
whereby in relation to the total weight of the aqueous disinfectant, the peroxide compound is included in the aqueous disinfectant in a concentration of less than 10% by weight, surfactant is included in a concentration of less than 0.1 % by weight and chelating agents are included in a concentration of less than 0.1 % by weight.

2. Use of an aqueous disinfectant according to claim 1, also including a weak organic acid, selected from the group consisting of pyruvic acid, lactic acid, sorbic acid, salts thereof, derivates thereof and mixtures thereof.

3. Use of an aqueous disinfectant according to claim 1 or 2, whereby the peroxide compound is selected from the group consisting of alkaline peroxide, earth metal alkaline peroxide, hydrogen peroxide, peroxyacids, perborates, perphosphates, percarbonates, persilicates, persulphates, derivatives and mixtures thereof.

4. Use of an aqueous disinfectant according to any one of the preceding claims, whereby the organic solvent is selected from the group consisting of glycerine, ethylene glycol, propylene glycol, diethylene glycol, dipropylene glycol monomethyl ether, methanol, ethanol, 1-propanol, isopropanol, glycolether and mixtures thereof.

5. Use of an aqueous disinfectant according to any one of the preceding claims, whereby the peroxide compound is included in the aqueous disinfectant in a concentration of 0.001 to 10% by weight in relation to the total weight of the aqueous disinfectant.

6. Use of an aqueous disinfectant according to any one of the preceding claims, whereby the organic solvent is included in the aqueous disinfectant in a concentration of 0.01 to 10% by weight in relation to the total weight of the aqueous disinfectant.

7. Use of an aqueous disinfectant according to any one of the preceding claims, whereby the weak organic acid is included in the aqueous disinfectant in a concentration of 0.00001 to 5% by weight in relation to the total weight of the aqueous disinfectant.

8. Use of the aqueous disinfectant according to any one of preceding claims for air disinfection and/or reduction of airborne germs in the production of foodstuffs, in packing of foodstuffs, in storage of foodstuffs, in cold rooms and ripening rooms, in the sale of foodstuffs, in the production and/or packing of medications, in biotechnological procedures, in private households, in sports facilities, in swimming pools, in medical environments and/or in ventilation systems and air-conditioning systems.

9. Use of the disinfectant according to any one of the preceding claims for the disinfection of air, whereby the aqueous disinfectant according to any one of claims 1 to 8 is applied into the air in a concentration of 0.01 to 50 ml of the aqueous disinfectant per m³ of air per h in the form of an aerosol.

10. Use according to claim 9, whereby the aerosol comprises droplets of liquid with an average droplet size from a range of 20 nm to 50 µm.

11. Use according to claim 9 or 10, whereby the concentration of the peroxide is in the range between 0.00005 and 1.5g per m³ of the space volume per hour, the concentration of the organic solvent is between 0.0000015 and 2.5g per m³ of the space volume per hour, and/or the concentration of the weak organic acid is between 0.000000001 and 0.15g per m³ of the space volume per hour.

## Revendications

1. Utilisation d'un désinfectant aqueux pour la désinfection de l'air et/ou pour la réduction des germes dans l'air, comprenant :
a) au moins un composé peroxyde,
b) au moins un solvant organique, choisi parmi un alcool aliphatique et/ou un éther aliphatique, et
c) de l'acide acétique,
sachant que le composé peroxyde est contenu dans le désinfectant aqueux en une concentration de moins de 10 % en poids, des tensioactifs en une concentration de moins de 0,1 % en poids et des agents chélatants en une concentration de moins de 0,1 % en poids, rapportée au poids total du désinfectant aqueux.

2. Utilisation d'un désinfectant aqueux selon la revendication 1, comprenant en outre un acide faible, choisi parmi le groupe constitué de l'acide pyruvique, de l'acide lactique, de l'acide sorbique, des sels de ceux-ci, des dérivés de ceux-ci, et des mélanges de ceux-ci.

3. Utilisation d'un désinfectant aqueux selon la revendication 1 ou 2, le composé peroxyde étant choisi parmi le groupe constitué des peroxydes alcalins, des peroxydes alcalinoterreux, du peroxyde d'hydrogène, des acides peroxydés, des perborates, des perphosphates, des percarbonates, des persilicates, des persulfates, des dérivés et des mélanges de ceux-ci.

4. Utilisation d'un désinfectant aqueux selon l'une quelconque des revendications précédentes, le solvant organique étant choisi parmi le groupe constitué du glycérol, de l'éthylène glycol, du propylène glycol, du diéthylène glycol, du monométhyléther dipropylène glycol, du méthanol, de l'éthanol, du 1-propanol, de l'isopropanol, des éthers de glycol et des mélanges de ceux-ci.

5. Utilisation d'un désinfectant aqueux selon l'une quelconque des revendications précédentes, le composé peroxyde étant contenu dans le désinfectant aqueux en une concentration de 0,001 à 10 % en poids, rapportée au poids total du désinfectant aqueux.

6. Utilisation d'un désinfectant aqueux selon l'une quelconque des revendications précédentes, le solvant organique étant contenu dans le désinfectant aqueux en une concentration de 0,01 à 10 % en poids, rapportée au poids total du désinfectant aqueux.

7. Utilisation d'un désinfectant aqueux selon l'une quelconque des revendications précédentes, l'acide faible étant contenu dans le désinfectant aqueux en une concentration de 0,00001 à 5 % en poids, rapportée au poids total du désinfectant aqueux.

8. Utilisation du désinfectant aqueux selon l'une quelconque des revendications précédentes pour la désinfection de l'air et/ou pour la réduction des germes dans l'air lors de la production de denrées alimentaires, lors du conditionnement de denrées alimentaires, lors du magasinage de denrées alimentaires, dans des chambres froides et des chambres de maturation, dans le cadre de la vente des denrées alimentaires, lors de la préparation et/ou du conditionnement de produits pharmaceutiques, dans le cadre de processus biotechnologiques, dans des ménages privés, dans des installations sportives, dans des piscines, dans le secteur médical et/ou dans des installations de ventilation et/ou de climatisation.

9. Utilisation du désinfectant aqueux selon l'une quelconque des revendications précédentes à la désinfection de l'air, le désinfectant aqueux selon l'une quelconque des revendications 1 à 8 étant émis dans l'air sous la forme d'un aérosol en une concentration de 0,01 à 50 ml de désinfectant aqueux par m³ d'air et par heure.

10. Utilisation selon la revendication 9, l'aérosol comportant des gouttelettes de liquide avec une taille moyenne des gouttelettes dans un intervalle de 20 nm à 50 µm.

11. Utilisation selon la revendication 9 ou 10, la concentration des peroxydes étant dans l'intervalle entre 0,00005 et 1,5 g par m³ de volume du local et par heure, la concentration du solvant organique entre 0, 0000015 et 2,5 g par m³ de volume du local et par heure et/ou la concentration de l'acide faible entre 0,000000001 et 0,15 g par m³ de volume du local et par heure.
